# EUROPÄISCHE PATENTSCHRIFT

(11) **EP 3 046 800 B1**
(45) Veröffentlichungstag und Bekanntmachung des Hinweises auf die Patenterteilung: **21.02.2018**
(21) Anmeldenummer: 14771856.3
(22) Anmeldetag: 19.09.2014
(51) Int. Cl.: B60L 11/18, E05B 47/06, E05B 47/00, H01R 13/639

(54) **ELEKTROMECHANISCHE VERRIEGELUNGSVORRICHTUNG**
ELECTROMECHANICAL LOCKING DEVICE
DISPOSITIF DE VERROUILLAGE ÉLECTROMÉCANIQUE

(30) Priorität: 20.09.2013 DE 102013110428
(43) Veröffentlichungstag der Anmeldung: 27.07.2016
(73) Patentinhaber: Phoenix Contact e-Mobility GmbH, 32816 Schieder-Schwalenberg (DE)
(72) Erfinder: MOSEKE, Dirk, 37671 Höxter-Lüchtringen (DE)
(74) Vertreter: Janke, Christiane
(86) Internationale Anmeldenummer: PCT/EP2014/069981
(87) Internationale Veröffentlichungsnummer: WO 2015/040154

(56) Entgegenhaltungen:
- EP-A1- 0 826 551
- EP-A1- 1 057 954
- DE-A1-102011 050 938
- DE-A1-102012 101 094
- US-A1- 2011 277 516
- US-A1- 2011 306 223
- US-A1- 2012 252 251
- US-A1- 2013 078 841

## Beschreibung

Die Erfindung betrifft eine elektromechanische Verriegelungsvorrichtung, insbesondere zur Verriegelung eines in eine Ladesteckdose eingesteckten Ladesteckers.

Batterien von Fahrzeugen aus dem Bereich der E-Mobility werden für gewöhnlich über einen Ladestecker aufgeladen, der in eine fahrzeugseitige Ladesteckdose einsteckbar ist. Ein Ladevorgang zum Aufladen der Batterien eines E-Mobility-Fahrzeugs dauert im Vergleich zum Betanken von Fahrzeugen mit einem Verbrennungsmotor sehr lange. In der Regel beträgt ein solcher Aufladevorgang mehrere Stunden.

Bei einem derart langen Aufladevorgang ist es keiner Person zumutbar, den Aufladevorgang des Fahrzeugs über die gesamte Ladedauer zu begleiten. Daher besteht die Gefahr, dass der Aufladevorgang vor dem vollständigen Aufladen der Batterien durch das Ausstecken des Ladesteckers aus Ladesteckdose von einem unbefugten Dritten unterbrochen wird.

Verriegelungsvorrichtungen, welche eine Ausstecken des Ladesteckers aus einer Ladesteckdose verhindern sollen, sind beispielsweise aus der US 2013/0078841 A1, EP 0 826 551 A und US 2012/0252251 A1 bekannt.

Es ist die Aufgabe der Erfindung, eine verlässliche elektromechanische Verriegelungsvorrichtung anzugeben, mit der ein unplanmäßiges Ausstecken eines Ladesteckers aus einer Ladesteckdose verhindert werden kann, welche kompakte Abmessungen aufweist. Diese Aufgabe wird durch den Gegenstand des Patentanspruchs 1 gelöst. Bevorzugte Weiterbildungen sind in den Unteransprüchen angegeben.

Erfindungsgemäß ist somit eine elektromechanische Verriegelungsvorrichtung vorgesehen, umfassend einen bistabilen Magneten, eine mit dem bistabilen Magneten gekoppelte und verschiebbar gelagerte Verriegelungsansteuerung, eine mit der Verriegelungsansteuerung mechanisch gekoppelte Kraftübertragungseinheit und einen über die Kraftübertragungseinheit verschiebbaren Verriegelungsstift, wobei durch eine axiale Verschiebung der Verriegelungsansteuerung der Verriegelungsstift in einer im Wesentlichen zur Verschiebungsrichtung der Verriegelungsansteuerung senkrechten Richtung axial verschiebbar ist. Die Erfindung zeichnet sich dadurch aus, dass die mechanische Kraftübertragungseinheit ein Zahnrad und ein Verriegelungsschließstück umfasst, wobei das Zahnrad die axiale Verschiebung der Verriegelungsansteuerung durch eine Drehbewegung in eine parallele, entgegen der axialen Verschiebungsrichtung der Verriegelungsansteuerung translatorische Verschiebung des Verriegelungsschließstücks überträgt und das Verriegelungsschließstück die translatorische Verschiebung auf den Verriegelungsstift in eine im Wesentlichen zur axialen Verschiebung senkrechten Richtung überträgt.

Es ist somit ein wesentlicher Aspekt der Erfindung, dass ausgehend von der axialen Verschiebung der Verriegelungsansteuerung der Verriegelungsstift über die mechanische Kraftübertragungseinrichtung in eine im Wesentlichen zur Verriegelungsansteuerung senkrechte Richtung axial verschiebbar ist. Auf diese Weise kann der bistabile Magnet mit der axial verschiebbaren Verriegelungsansteuerung im Wesentlichen senkrecht zur Achse des Verriegelungsstiftes angeordnet werden, was aus Platzgründen vorteilhaft sein kann. Dadurch, dass nunmehr die mechanische Kraftübertragungseinheit ein Zahnrad und ein Verriegelungsschließstück umfasst, wobei das Zahnrad die axiale Verschiebung der Verriegelungsansteuerung durch eine Drehbewegung in eine parallele, entgegen der axialen Verschiebungsrichtung der Verriegelungsansteuerung translatorische Verschiebung des Verriegelungsschließstücks überträgt und das Verriegelungsschließstück die translatorische Verschiebung auf den Verriegelungsstift in eine im Wesentlichen zur axialen Verschiebung senkrechten Richtung überträgt, wird die axiale Verschiebung der Verriegelungsansteuerung derart über das Zahnrad und das Verriegelungsschließstück auf den Verriegelungsstift übertragen, dass die elektromechanische Verriegelungsvorrichtung kompakte Abmessungen aufweist.

Eine bevorzugte Weiterbildung der Erfindung sieht vor, dass der Verriegelungsstift zwischen einer Verriegelungsposition und einer Entriegelungsposition verschiebbar ist. Auf diese Weise ist der Verriegelungsstift derart verschiebbar, dass mit dem Verriegelungsstift einerseits eine Verriegelungswirkung erzielbar ist und andererseits die Verriegelungswirkung wieder aufgehoben werden kann.

Eine weitere bevorzugte Weiterbildung der Erfindung sieht vor, dass die Verriegelungsansteuerung einen ersten Zahnstangenabschnitt und das Verriegelungsschließstück einen zweiten Zahnstangenabschnitt aufweist und das Zahnrad in den ersten Zahnstangenabschnitt der Verriegelungsansteuerung und in den zweiten Zahnstangenabschnitt des Verriegelungsschließstücks eingreift. Auf diese Weise erfolgt ein mechanisches Ineinandergreifen zwischen der Verriegelungsansteuerung, dem Zahnrad und dem Verriegelungsschließstück.

Gemäß einer weiteren bevorzugten Weiterbildung der Erfindung ist vorgesehen, dass das Zahnrad einen ersten Zahnbereich und einen zweiten Zahnbereich aufweist, wobei der erste Zahnbereich und der zweite Zahnbereich übereinander angeordnet sind. Somit kann der erste Zahnbereich des Zahnrads in den ersten Zahnstangenabschnitt der Verriegelungsansteuerung eingreifen und der zweiten Zahnbereich des Zahnrads in den zweiten Zahnbereich des Verriegelungsschließstücks.

In diesem Zusammenhang sieht eine weitere bevorzugte Weiterbildung der Erfindung vor, dass der erste Zahnbereich einen ersten Zahnraddurchmesser und der zweite Zahnbereich einen zweiten Zahnraddurchmesser aufweist. Auf diese Weise ermöglicht das Zahnrad eine Übersetzung der axialen Verschiebung der Verriegelungsansteuerung. Abhängig vom ersten Zahnraddurchmesser und vom zweiten Zahnraddurchmesser kann somit der Verschiebungsweg der Verriegelungsansteuerung in einen größeren oder kleineren Verschiebungsweg des Verriegelungsschließstücks übersetzt werden.

Eine weitere bevorzugte Weiterbildung der Erfindung liegt darin, dass das Verriegelungsschließstück eine Kulissenführung aufweist und der Verriegelungsstift innerhalb der Kulissenführung verschiebbar gelagert ist. Dabei weist die Kulissenführung eine in Bezug auf die Verschiebungsrichtung des Verriegelungsschließstücks transversale Anordnung auf. Auf diese Weise ist der Verriegelungsstift im Wesentlichen senkrecht zur Verschiebungsrichtung des Verriegelungsschließstücks axial verschiebbar. Die axiale Verschiebung des Verriegelungsstifts in Abhängigkeit der Verschiebung der Verriegelungsvorrichtung ist über den Winkel der transversal angeordneten Kulissenführung einstellbar.

In diesem Zusammenhang sieht eine weitere bevorzugte Weiterbildung der Erfindung vor, dass die Kulissenführung in Verriegelungsposition des Verriegelungsstiftes und in Entriegelungsposition des Verriegelungsstiftes einen im Wesentlichen zur Achse des Verriegelungsstiftes senkrechte Führung aufweist. Auf diese Weise wird ein Mechanismus geschaffen, der eine manuelle Verschiebung des Verriegelungsstiftes aus der Verriegelungsposition oder der Entriegelungsposition durch ein Drücken respektive Ziehen am Verriegelungsstift verhindert.

Gemäß einer weiteren bevorzugten Weiterbildung der Erfindung ist vorgesehen, dass die Verriegelungsvorrichtung über einen Microschalter steuerbar ist. Auf diese Weise ist die Position des Verriegelungsstiftes abrufbar und steuerbar. Durch einen Stromimpuls kann der Verriegelungsstift von der Entriegelungsposition in die Verriegelungsposition verschoben werden. Ebenso ist eine Verschiebung aus der Verriegelungsposition in die Entriegelungsposition möglich. Eine kontinuierliche Stromversorgung der elektromechanischen Verriegelungsvorrichtung ist nicht erforderlich.

Abschließend sieht eine weitere bevorzugte Weiterbildung der Erfindung vor, dass die elektromechanische Verriegelungsvorrichtung eine Notentriegelungsvorrichtung aufweist. Hierzu ist an einem Ende der Verriegelungsansteuerung eine Zugvorrichtung angebracht. Durch Ziehen an der Zugeinrichtung der Verriegelungsansteuerung wird die Verschiebung der Verriegelungsansteuerung über das Zahnrad und die Verriegelungsvorrichtung auf den Verriegelungsstift übertragen und der Verriegelungsstift von der Verriegelungsposition in die Entriegelungsposition verschoben. Auf diese Weise wird sichergestellt, dass bei einem Defekt der elektromechanischen Verriegelungsvorrichtung der Verriegelungsstift von der Verriegelungsposition in die Entriegelungsposition verschiebbar ist.

Nachfolgend wird die Erfindung anhand eines bevorzugten Ausführungsbeispiels unter Bezugnahme auf die Zeichnung näher erläutert. In der Zeichnung zeigen:
- Fig. 1: eine dreidimensionale Ansicht einer elektromechanischen Verriegelungsvorrichtung mit horizontaler Verriegelung gemäß einem bevorzugten Ausführungsbeispiel der Erfindung,
- Fig. 2: eine dreidimensionale Ansicht der elektromechanischen Verriegelungsvorrichtung mit vertikaler Verriegelungsvorrichtung gemäß dem bevorzugten Ausführungsbeispiel der Erfindung,
- Fig. 3: eine dreidimensionale Ansicht der elektromechanischen Verriegelungsvorrichtung mit Gehäuse gemäß dem bevorzugten Ausführungsbeispiel der Erfindung und,
- Fig. 4a,b: eine dreidimensionale Ansicht der elektromechanischen Verriegelungsvorrichtung in Verbindung mit einer Ladesteckdose gemäß dem bevorzugten Ausführungsbeispiel der Erfindung.

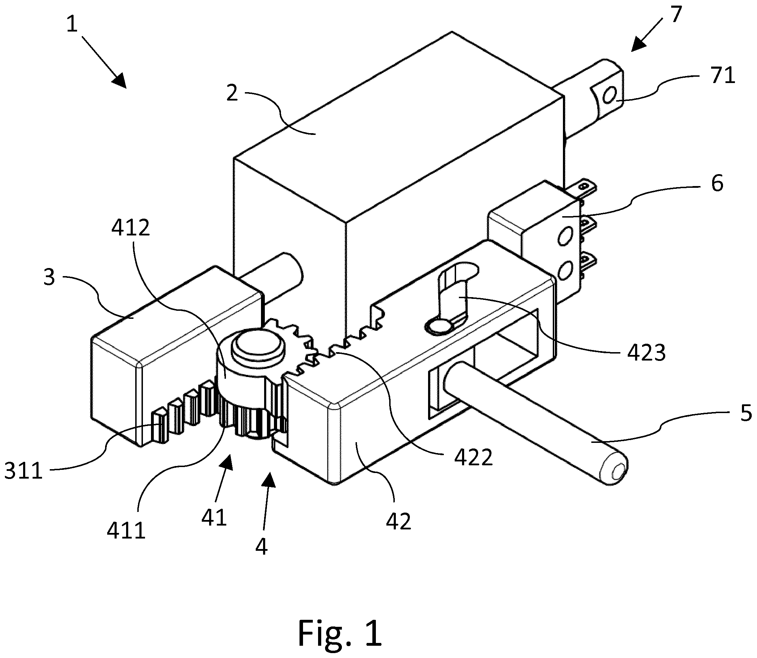

In Figur 1 ist eine elektromechanische Verriegelungsvorrichtung 1 gemäß einem bevorzugten Ausführungsbeispiel der Erfindung gezeigt. Die Verriegelungsvorrichtung 1 umfasst einen bistabilen Magneten 2, eine mit dem bistabilen Magneten 2 gekoppelte und verschiebbar gelagerte Verriegelungsansteuerung 3, eine mit der Verriegelungsansteuerung 3 mechanisch gekoppelte Kraftübertragungseinheit 4 und einen über die Kraftübertragungseinheit 4 verschiebbaren Verriegelungsstift 5, wodurch durch eine axiale Verschiebung der Verriegelungsansteuerung 3 der Verriegelungsstift 5 in einer im Wesentlichen zur Verschiebungsrichtung der Verriegelungsansteuerung 3 senkrechten Richtung axial verschiebbar ist.

Die Kraftübertragungseinheit 4 umfasst ein Zahnrad 41 und ein Verriegelungsschließstück 42, wobei das Zahnrad 41 die axiale Verschiebung der Verriegelungsansteuerung 3 durch eine Drehbewegung in eine parallele, entgegen der axialen Verschiebungsrichtung der Verriegelungsansteuerung 3 translatorische Verschiebung des Verriegelungsschließstücks 4 überträgt und das Verriegelungsschließstück 42 die translatorische Verschiebung auf den Verriegelungsstift 5 in eine im Wesentlichen zur axialen Verschiebung senkrechten Richtung überträgt.

Zur mechanischen Übertragung der axialen Verschiebung der Verrieglungsansteuerung 3 auf den Verriegelungsstift 5 weist die Verriegelungsansteuerung 3 einen ersten Zahnstangenabschnitt 311 und das Zahnrad 41 einen ersten Zahnbereich 411 und einen über dem ersten Zahnbereich 411 angeordneten zweiten Zahnbereich 412 auf, wobei der erste Zahnbereich 411 des Zahnrads 41 in den ersten Zahnstangenabschnitt 311 der Verriegelungsansteuerung 3 eingreift. Das Verriegelungsschließstück 42 weist einen zweiten Zahnstangenabschnitt 422 auf, welcher in den zweiten Zahnbereich 412 des Zahnrads 41 eingreift. Weiterhin umfasst das Verriegelungsschließstück 42 eine bezogen auf die Verschiebungsrichtung transversal angeordnete Kulissenführung 423, wobei der Verriegelungsstift 5 innerhalb der Kulissenführung 423 geführt wird.

Die axiale Verschiebung der Verriegelungsansteuerung 3 ist demnach über das Zahnrad 41 und das Verriegelungsschließstück 42 auf den Verriegelungsstift 5 übertragbar, so dass dieser zwischen einer Verriegelungsposition und einer Entriegelungsposition verschiebbar ist.

Weiterhin ist ersichtlich, dass die Kulissenführung 423 an ihrem jeweiligen Führungsende einen im Wesentlichen zur Achse des Verriegelungsstiftes 5 senkrechten Führungsverlauf aufweist. Auf diese Weise wird ein Mechanismus geschaffen, der eine manuelle Verschiebung des Verriegelungsstiftes 5 aus der Verriegelungsposition oder der Entriegelungsposition durch ein Drücken respektive Ziehen am Verriegelungsstift 5 verhindert.

Die elektromechanische Verriegelungsansteuerung 1 ist über einen Mircoschalter 6 ansteuerbar ist. Über den Mircoschalter 6 ist die Position des Verriegelungsstiftes 5 abrufbar und steuerbar. Durch einen Stromimpuls kann der Verriegelungsstift 5 von der Entriegelungsposition in die Verriegelungsposition verschoben werden. Ebenso ist eine Verschiebung aus der Verriegelungsposition in die Entriegelungsposition möglich. Eine kontinuierliche Stromversorgung der elektromechanischen Verriegelungsvorrichtung ist nicht erforderlich.

Weiterhin weist die elektromechanische Verriegelungsvorrichtung 1 eine Notentriegelungsvorrichtung 7 aufweist. Am Ende der Verriegelungsansteuerung 3 ist eine Zugvorrichtung 71 angebracht. Durch Ziehen an der Zugeinrichtung 71 der Verriegelungsansteuerung 3 wird die Verschiebung der Verriegelungsansteuerung 3 über das Zahnrad 41 und die Verriegelungsvorrichtung 42 auf den Verriegelungsstift 5 übertragen und der Verriegelungsstift 5 von der Verriegelungsposition in die Entriegelungsposition verschoben. Auf diese Weise wird sichergestellt, dass bei einem Defekt der elektromechanischen Verriegelungsvorrichtung 1 der Verriegelungsstift 5 von der Verriegelungsposition in die Entriegelungsposition verschiebbar ist.

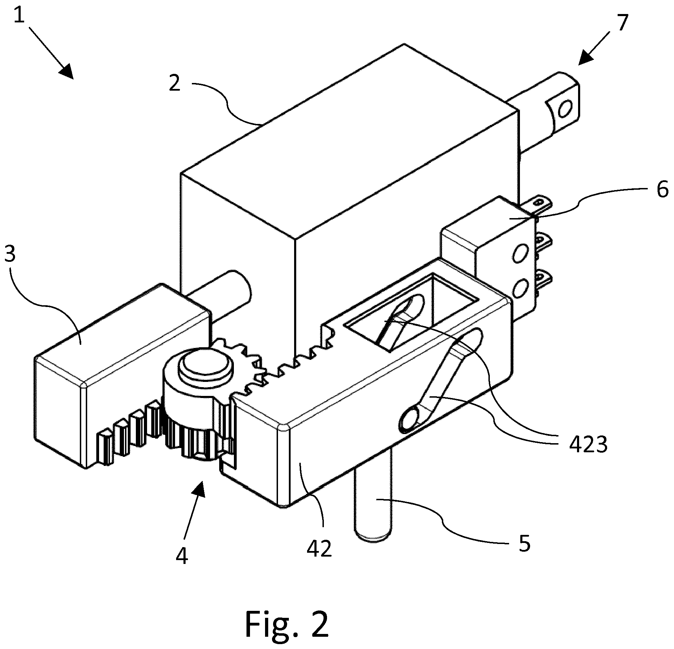

Im Unterschied zu Figur 1 ist bei der Verriegelungsvorrichtung 1 aus Figur 2 die Kulissenführung 423 des Verriegelungsschließstücks 42 um 90° gedreht. Auf diese Weise ist der Verriegelungsstift 5 weiterhin durch eine axiale Verschiebung der Verriegelungsansteuerung 3 in einer im Wesentlichen zur Verschiebungsrichtung der Verriegelungsansteuerung 3 senkrechten Richtung axial verschiebbar. Allerdings kann durch die Wahl der Anordnung der Kulissenführung 423, unabhängig von der Ausrichtung der Achse der Verriegelungsansteuerung 3, eine elektromechanische Verriegelungsvorrichtung 1 mit einer horizontaler Anordnung des Verriegelungsstiftes 5, wie in Figur 1 gezeigt, oder einer vertikalen Anordnung des Verriegelungsstiftes 5, wie in Figur 2 gezeigt, angegeben werden.

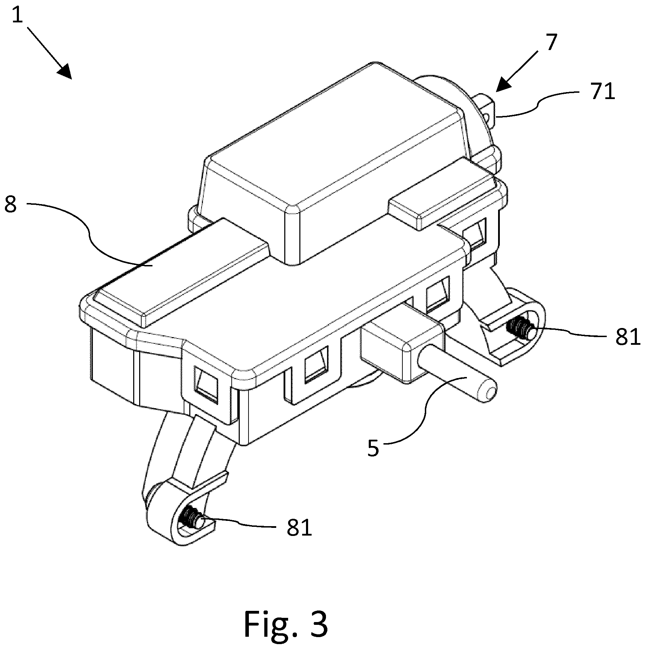

Aus Figur 3 ist die elektromechanische Verriegelungsvorrichtung 1 in einem Gehäuseteil 8 gezeigt, wobei der Verriegelungsstift 6 und die Zugvorrichtung 71 der Notentriegelungsvorrichtung 7 durch das Gehäuse geführt sind. Weiterhin weist das Gehäuseteil 8 mindestens eine Befestigungsvorrichtung auf.

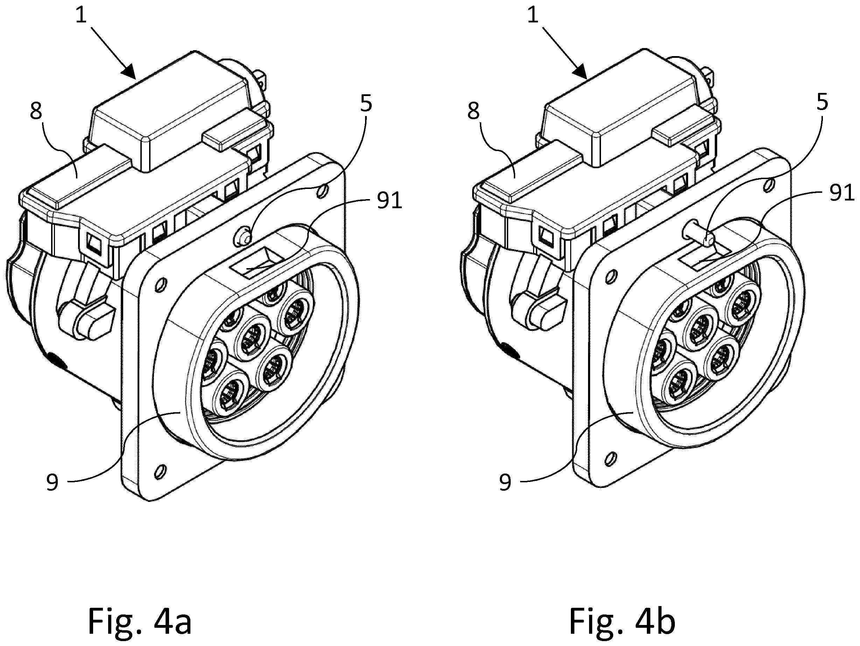

Die Figuren 4a und 4b zeigen die elektromechanische Verriegelungsvorrichtung 1 in Verbindung mit einer Ladesteckdose 9. Wie aus Figur 4a ersichtlich, befindet sich der Verriegelungsstift 6 in der Entriegelungsposition. In Entriegelungsposition kann ein Ladestecker in die Ladesteckdose 9 eingesteckt werden und die Rastvorrichtung des Ladesteckers mit der Rastvorrichtung 91 der Ladesteckdose 9 verrasten. Die Figur 4b zeigt den Verriegelungsstift 6 in Verriegelungsposition. Der Verriegelungsstift 6 überdeckt die Rastvorrichtung 91, so dass die Verrastung des in die Ladesteckdose 9 eingesteckten Ladesteckers blockiert wird und ein Ausstecken des Ladesteckers auf diese Weise nicht möglich ist.
- 1: Elektromechanische Verriegelungsvorrichtung

- 2: Bistabilen Magneten

- 3: Verriegelungsansteuerung
- 311: Erster Zahnstangenabschnitt

- 4: Kraftübertragungseinheit
- 41: Zahnrad
- 411: Erster Zahnbereich
- 412: Zweiter Zahnbereich
- 42: Verriegelungsschließstück
- 422: Zweiter Zahnstangenabschnitt
- 423: Kulissenführung

- 5: Verriegelungsstift

- 6: Microschalter

- 7: Notentriegelungsvorrichtung
- 71: Zugvorrichtung

- 8: Gehäuseteil
- 81: Befestigungsvorrichtung

- 9: Ladesteckdose
- 91: Rastvorrichtung

## Patentansprüche

1. Elektromechanische Verriegelungsvorrichtung (1), umfassend einen bistabilen Magneten (2), eine mit dem bistabilen Magneten (2) gekoppelte und verschiebbar gelagerte Verriegelungsansteuerung (3), eine mit der Verriegelungsansteuerung (3) mechanisch gekoppelte Kraftübertragungseinheit (4) und einen über die Kraftübertragungseinheit (4) verschiebbaren Verriegelungsstift (5), wobei durch eine axiale Verschiebung der Verriegelungsansteuerung (3) der Verriegelungsstift (5) in einer im Wesentlichen zur Verschiebungsrichtung der Verriegelungsansteuerung (3) senkrechten Richtung axial verschiebbar ist **dadurch gekennzeichnet, dass** die mechanische Kraftübertragungseinheit (4) ein Zahnrad (41) und ein Verriegelungsschließstück (42) umfasst, wobei das Zahnrad (41) die axiale Verschiebung der Verriegelungsansteuerung (3) durch eine Drehbewegung in eine parallele, entgegen der axialen Verschiebungsrichtung der Verriegelungsansteuerung (3) translatorische Verschiebung des Verriegelungsschließstücks (42) überträgt und das Verriegelungsschließstück (42) die translatorische Verschiebung auf den Verriegelungsstift (5) in eine im Wesentlichen zur axialen Verschiebung senkrechten Richtung überträgt.

2. Elektromechanische Verriegelungsvorrichtung nach Anspruch 1, **dadurch gekennzeichnet, dass** der Verriegelungsstift (5) zwischen einer Verriegelungsposition und einer Entriegelungsposition verschiebbar ist.

3. Elektromechanische Verriegelungsvorrichtung nach Anspruch 1 oder 2, **dadurch gekennzeichnet, dass** die Verriegelungsansteuerung (3) einen ersten Zahnstangenabschnitt (311) und das Verriegelungsschließstück (42) einen zweiten Zahnstangenabschnitt (422) aufweist und das Zahnrad (41) in den ersten Zahnstangenabschnitt (311) der Verriegelungsansteuerung (3) und in den zweiten Zahnstangenabschnitt (422) des Verriegelungsschließstücks (42) eingreift.

4. Elektromechanische Verriegelungsvorrichtung nach einem der Ansprüche 1 bis 3, **dadurch gekennzeichnet, dass** das Zahnrad (41) einen ersten Zahnbereich (411) und einen zweiten Zahnbereich (412) aufweist, wobei der erste Zahnbereich (411) und der zweite Zahnbereich (412) übereinander angeordnet sind.

5. Elektromechanische Verriegelungsvorrichtung nach Anspruch 4, **dadurch gekennzeichnet, dass** der erste Zahnbereich (411) einen ersten Zahnraddurchmesser und der zweite Zahnbereich (412) einen zweiten Zahnraddurchmesser aufweist.

6. Elektromechanische Verriegelungsvorrichtung nach einem der Ansprüche 1 bis 5, **dadurch gekennzeichnet, dass** das Verriegelungsschließstück (42) eine Kulissenführung (423) aufweist und der Verriegelungsstift (5) innerhalb der Kulissenführung (423) verschiebbar gelagert ist.

7. Elektromechanische Verriegelungsvorrichtung nach Anspruch 6, **dadurch gekennzeichnet, dass** die Kulissenführung (423) in Verriegelungsposition des Verriegelungsstiftes (5) und in Entriegelungsposition des Verriegelungsstiftes (5) einen im Wesentlichen zur Achse des Verriegelungsstiftes (5) senkrechte Führung aufweist.

8. Elektromechanische Verriegelungsvorrichtung nach einem der Ansprüche 1 bis 7, **dadurch gekennzeichnet, dass** die Verriegelungsvorrichtung (5) über einen Microschalter (6) steuerbar ist.

9. Elektromechanische Verriegelungsvorrichtung nach einem der Ansprüche 1 bis 8, **dadurch gekennzeichnet, dass** die elektromechanische Verriegelungsvorrichtung (1) eine Notentriegelungsvorrichtung (7) aufweist.

## Claims

1. Electromechanical locking device (1), comprising a bistable magnet (2), a displaceably mounted locking controller (3) coupled to the bistable magnet (2), a force transmission unit (4) coupled mechanically to the locking controller (3), and a locking pin (5) which is displaceable by way of the force transmission unit (4), wherein, by axial displacement of the locking controller (3), the locking pin (5) is displaceable axially in a direction which is substantially perpendicular to the direction of displacement of the locking controller (3), **characterized in that** the mechanical force transmission unit (4) comprises a toothed wheel (41) and a locking closure piece (42), wherein the toothed wheel (41) converts the axial displacement of the locking controller (3), by way of a rotational movement, into a parallel, translational displacement of the locking closure piece (42) counter to the axial direction of displacement of the locking controller (3), and the locking closure piece (42) transfers the translational displacement onto the locking pin (5) in a direction which is substantially perpendicular to the axial displacement.

2. Electromechanical locking device according to Claim 1, **characterized in that** the locking pin (5) is displaceable between a locking position and an unlocking position.

3. Electromechanical locking device according to Claim 1 or 2, **characterized in that** the locking controller (3) has a first rack portion (311) and the locking closure piece (42) has a second rack portion (422), and the toothed wheel (41) engages into the first rack portion (311) of the locking controller (3) and into the second rack portion (422) of the locking closure piece (42).

4. Electromechanical locking device according to one of Claims 1 to 3, **characterized in that** the toothed wheel (41) has a first tooth region (411) and a second tooth region (412), wherein the first tooth region (411) and the second tooth region (412) are arranged one above the other.

5. Electromechanical locking device according to Claim 4, **characterized in that** the first tooth region (411) has a first toothed wheel diameter and the second tooth region (412) has a second toothed wheel diameter.

6. Electromechanical locking device according to one of Claims 1 to 5, **characterized in that** the locking closure piece (42) has a slotted guide system (423), and the locking pin (5) is mounted displaceably within the slotted guide system (423) .

7. Electromechanical locking device according to Claim 6, **characterized in that** the slotted guide system (423) has a guide which is substantially perpendicular to the axis of the locking pin (5) in the locking position of the locking pin (5) and in the unlocking position of the locking pin (5).

8. Electromechanical locking device according to one of Claims 1 to 7, **characterized in that** the locking device (5) can be controlled by way of a microswitch (6).

9. Electromechanical locking device according to one of Claims 1 to 8, **characterized in that** the electromechanical locking device (1) has an emergency unlocking device (7).

## Revendications

1. Dispositif de verrouillage électromécanique (1), comprenant un aimant bistable (2), une commande de verrouillage (3) accouplée à l'aimant bistable (2) et supportée de manière déplaçable, une unité de transfert de force (4) accouplée mécaniquement à la commande de verrouillage (3) et une goupille de verrouillage (5) pouvant être déplacée par le biais de l'unité de transfert de force (4), la goupille de verrouillage (5) pouvant être déplacée axialement par un déplacement axial de la commande de verrouillage (3) dans une direction essentiellement perpendiculaire à la direction de déplacement de la commande de verrouillage (3), **caractérisé en ce que** l'unité de transfert de force mécanique (4) comprend une roue dentée (41) et une pièce de fermeture de verrouillage (42), la roue dentée (41) convertissant le déplacement axial de la commande de verrouillage (3) par un mouvement de rotation en un déplacement de translation parallèle, dans le sens opposé à la direction de déplacement axial de la commande de verrouillage (3), de la pièce de fermeture de verrouillage (42) et la pièce de verrouillage (42) transférant le déplacement de translation à la goupille de verrouillage (5) dans une direction essentiellement perpendiculaire au déplacement axial.

2. Dispositif de verrouillage électromécanique selon la revendication 1, **caractérisé en ce que** la goupille de verrouillage (5) peut être déplacée entre une position de verrouillage et une position de déverrouillage.

3. Dispositif de verrouillage électromécanique selon la revendication 1 ou 2, **caractérisé en ce que** la commande de verrouillage (3) présente une première portion de crémaillère (311) et la pièce de fermeture de verrouillage (42) présente une deuxième portion de crémaillère (422) et la roue dentée (41) s'engage dans la première portion de crémaillère (311) de la commande de verrouillage (3) et dans la deuxième portion de crémaillère (422) de la pièce de fermeture de verrouillage (42) .

4. Dispositif de verrouillage électromécanique selon l'une quelconque des revendications 1 à 3, **caractérisé en ce que** la roue dentée (41) présente une première région de dent (411) et une deuxième région de dent (412), la première région de dent (411) et la deuxième région de dent (412) étant disposées l'une au-dessus de l'autre.

5. Dispositif de verrouillage électromécanique selon la revendication 4, **caractérisé en ce que** la première région de dent (411) présente un premier diamètre de roue dentée et la deuxième région de dent (412) présente un deuxième diamètre de roue dentée.

6. Dispositif de verrouillage électromécanique selon l'une quelconque des revendications 1 à 5, **caractérisé en ce que** la pièce de fermeture de verrouillage (42) présente un guide à coulisse (423) et la goupille de verrouillage (5) est supportée de manière déplaçable à l'intérieur du guide à coulisse (423).

7. Dispositif de verrouillage électromécanique selon la revendication 6, **caractérisé en ce que** le guide à coulisse (423) présente dans la position de verrouillage de la goupille de verrouillage (5) et dans la position de déverrouillage de la goupille de verrouillage (5) un guide essentiellement perpendiculaire à l'axe de la goupille de verrouillage (5).

8. Dispositif de verrouillage électromécanique selon l'une quelconque des revendications 1 à 7, **caractérisé en ce que** le dispositif de verrouillage (5) peut être commandé par un minirupteur (6).

9. Dispositif de verrouillage électromécanique selon l'une quelconque des revendications 1 à 8, **caractérisé en ce que** le dispositif de verrouillage électromécanique (1) présente un dispositif de déverrouillage de secours (7).
